# EUROPÄISCHE PATENTSCHRIFT

(11) **EP 2 115 539 B1**
(45) Veröffentlichungstag und Bekanntmachung des Hinweises auf die Patenterteilung: **01.12.2010**
(21) Anmeldenummer: 08707499.3
(22) Anmeldetag: 01.02.2008
(51) Int. Cl.: G05B 19/05

(54) **STEUER- UND/ODER DATENÜBERTRAGUNGSMODUL**
CONTROL AND/OR DATA TRANSMISSION MODULE
MODULE DE COMMANDE ET/OU DE TRANSMISSION DE DONNÉES

(30) Priorität: 07.02.2007 DE 102007006830
(43) Veröffentlichungstag der Anmeldung: 11.11.2009
(73) Patentinhaber: Phoenix Contact GmbH & Co. KG, 32825 Blomberg (DE)
(72) Erfinder: RASCHE, Alexander, 32825 Blomberg (DE)
(74) Vertreter: Bill, Burkart Hartmut
(86) Internationale Anmeldenummer: PCT/EP2008/000813
(87) Internationale Veröffentlichungsnummer: WO 2008/095649

(56) Entgegenhaltungen:
- US-B1- 6 308 231

## Beschreibung

Die Erfindung betrifft ein Steuer- und/oder Datenübertragungssystem, umfassend eine Anzahl von benachbart aneinander gereihten E/A-Modulen und ein Steuer- und/oder Datenübertragungsmodul, sowie ein Steuer- und/oder Datenübertragungsmodul zur Ansteuerung von E/A-Modulen für ein solches Steuer- und Datenübertragungssystem.

Insbesondere im Bereich der Automatisierungstechnik bei der Automatisierung von komplexen logischen Verknüpfungen, Fehlervorgängen oder Zeitabläufen werden Zeitrelais, Zähler oder Relais den Anforderungen nach einem Universalsteuergerät häufig nur bedingt gerecht. Kompakte SPS (speicherprogrammierbare Steuerungs-)Systeme wiederum sind in ihren technischen Ausstattungsmerkmalen für kleine Anwendungen oftmals überdimensioniert und folglich auch in der Produktion zu teuer.

Um diese Lücke zu schließen, sind kleine oder Kleinststeuermodule oder Logikmodule bekannt, die dem Anwender den Vorteil bieten, dass er mit nur noch einer Automatisierungskomponente eine große Anzahl von Applikationen aus dem unteren Leistungsbereich realisieren kann. Je nach Typ und Erweiterung können mit solchen derzeitig am Markt erhältlichen Steuer- oder Logikmodulen zwischen 6 und 48 Eingänge oder Ausgänge, nachfolgend als E/A bezeichnet, verarbeitet werden. Für die nachfolgende Beschreibung und die Ansprüche wird ferner angenommen, dass über einen Eingang ein von einem Busteilnehmer, wie z.B. einem Sensor, kommendes, verarbeitetes oder lediglich durchgeleitetes Signal an einen Datenbus geführt wird und über einen Ausgang ein von einem Datenbus kommendes, verarbeitetes oder lediglich durchgeleitetes Signal an einen Busteilnehmer, wie z.B. einen Aktor, geführt wird.

Die Programmierung solcher Steuer- oder Logikmodule lässt sich beispielsweise direkt am Steuer- oder Logikmodul und/oder mit einer grafischen Software durchführen. Vielfach geschieht das in Funktionsblocktechnik, was auch ohne Programmierkenntnisse leicht zu bedienen ist. Folgende Grundfunktionen und Funktionsblöcke gehören bei allen derzeit bekannten Steuer- oder Logikmodulen zum Standard: AND, OR, NOT, XOR, NAND, NOR, Schaltverzögerung, Impulsgeber, Stromstoßrelais, Zähler, Taktgeber.

Alle derzeit am Markt erhältlichen Steuer- oder Logikmodule sind in nahezu einheitlichen Gehäusen verfügbar, die für Klein-/Feldverteiler angepasst sind. Vereinzelt gibt es auch Leiterplatten-Varianten.

Anzusteuernde Relais sind jedoch fest in die Steuer- oder Logikmodule integriert. Heutige Standard-Module haben üblicherweise 8 Eingänge und 4 Ausgänge, wobei beispielsweise 6 Eingänge für digitale Signale und 2 Eingänge für analoge Signale vorgesehen sind. Auch sind Varianten mit Relais- oder Transistorausgängen bekannt.

US6308231 B1 zeigt ein Steuer- und Datenübertragungssystem umfassend, eine Anzahl von benachbart aneinandergereihten E/A-Modulen, wobei jedes E/A-Modul wenigstens einen E/A-Signalkanal umfasst sowie wenigstens einen ersten Signalanschluss zum Verbinden des E/A-Signalkanals mit einem Datenbus und wenigstens einen zweiten Signalanschluss zum Verbinden eines Busteilnehmers mit dem E/A-Signalkanal, und wobei das System ein Steuer- und/oder Datenübertragungsmodul umfasst. Das System hat ein Steuermodul, dass mit der Anzahl von E/A-Modulen mechanisch miteinander verbunden ist und eine lösbare Einheit mit diesen bildet.

Ein wesentlicher Nachteil des Standes der Technik ist, dass es bei solchen Steuer- oder Logikmodulen immer nur eine feste Anzahl von Ein- und Ausgängen gibt. Darüber hinaus muß das gesamte Steuer- oder Logikmodul ausgetauscht werden, sollte ein Relais defekt sein.

Eine Aufgabe der Erfindung besteht somit darin, ein System zu schaffen, mit welchem eine Vielzahl von Anschlüssen eines kleinen Steuer- und/oder Datenübertragungsmoduls als Eingang oder als Ausgang für ein Steuer- und/oder Datenübertragungssignal individuell nutzbar ist.

Ferner besteht eine weitere Aufgabe darin, dass einem jeweiligen Eingang oder Ausgang individuell eine E/A-Elektronik zuweisbar ist.

Eine weitere Aufgabe besteht darin, dass bei Defekt einer E/A-Elektronik ein schneller und einfacher Austausch ermöglicht ist.

Erfindungsgemäße Lösungen sind in den anhängenden Ansprüchen wiedergegeben, wobei abhängige Ansprüche vorteilhafte und/oder bevorzugte Ausführungsformen oder Weiterbildungen der Erfindung betreffen.

Die Erfindung schlägt somit ein Steuer- und Datenübertragungssystem vor, welches eine Anzahl von benachbart aneinandergereihten E/A-Modulen umfasst, wobei jedes E/A-Modul wenigstens einen E/A-Signalkanal umfasst sowie wenigstens einen ersten Signalanschluss zum Verbinden des E/A-Signalkanals mit einem Datenbus und wenigstens einen zweiten Signalanschluss zum Verbinden eines Busteilnehmers mit dem E/A-Signalkanal, und wobei das System ein Steuer- und/oder Datenübertragungsmodul umfasst, welches eine Steuerelektronik zum gezielten Ansteuern der Anzahl von E/A-Modulen umfasst und mit der Anzahl von E/A-Modulen mechanisch miteinander verbunden ist und eine lösbare Einheit mit diesen bildet.

Die Erfindung schlägt ferner ein Steuer- und/oder Datenübertragungsmodul zur Ansteuerung von E/A-Modulen für ein Steuer- und Datenübertragungssystem, bei welchem jedes E/A-Modul wenigstens einen E/A-Signalkanal umfasst sowie einen ersten Signalanschluss zum Verbinden des E/A-Signalkanals mit einem Datenbus und zweiten Signalanschluss zum Verbinden eines Busteilnehmers mit dem E/A-Signalkanal und jedes E/A-Modul ferner eine erste Verbindungseinrichtung aufweist, vor. Das Steuer- und/oder Datenübertragungsmodul weist eine Anzahl von komplementär zu den ersten Verbindungseinrichtungen ausgebildeten zweiten Verbindungseinrichtungen auf, die zum lösbaren mechanischen Verbinden des Steuer- und/oder Datenübertragungsmoduls mit einer entsprechenden Anzahl von benachbart aneinandergereihten E/A-Modulen am Gehäuse des Steuer- und/oder Datenübertragungsmoduls in einer Reihe angeordnet sind, und eine in dem Gehäuse beherbergte Steuerelektronik zum gezielten Ansteuern von mit dem Steuer- und/oder Datenübertragungsmodul verbundenen E/A-Modulen.

Das Steuer- und Datenübertragungssmodul umfasst eine der Anzahl der mit diesem verbunden E/A-Module entsprechende Anzahl von dritten, der Steuerelektronik zugeordneten Signalanschlüssen, wobei die Anzahl der dritten Signalanschlüsse und die Anzahl der zweiten Verbindungseinrichtungen derart zueinander angeordnet sind, dass beim Verbinden des Steuer- und/oder Datenübertragungsmoduls mit der Anzahl von E/A-Modulen sich jeweils ein dritter Signalanschluss mit jeweils einem ersten Signalanschluss oder sich jeweils ein dritter Signalanschluss mit jeweils einem zweiten Signalanschluss paart.

Das Steuer- und Datenübertragungssystem weist zweckmäßig ferner eine Anzahl von vierten, der Steuerelektronik zugeordneten Signalanschlüssen auf, die von außerhalb des Steuer- und/oder Datenübertragungsmoduls zum Paaren zugänglich sind. Die vierten Signalanschlüsse sind insbesondere an einer integrierten Klemmleiste angeschlossen.

Die Steuerelektronik des erfindungsgemäßen Steuer- und Datenübertragungsmoduls ist bevorzugt programmierbar. Hierzu umfasst das Modul insbesondere einen Kommunikations-Schnittstellenverbinde zum Verbinden der Steuerelektronik mit einer entfernten Datenverarbeitungseinrichtung.

Ein E/A-Modul umfasst zum Bereitstellen des Signalkanals zweckmäßig eine zwischen dem ersten und zweiten Signalanschluss angeordnete E/A-Elektronik, die bevorzugt in das E/A-Modul steckbar ist.

Die E/A-Module können fünfte Signalanschlüsse zum Verbinden der E/A-Elektronik mit einem Busverbinder umfassen, wobei die E/A-Elektronik zum Übertragen von Daten zwischen dem fünften Signalanschluss und dem ersten Signalanschluss oder zum Übertragen von Daten zwischen dem fünften Signalanschluss und dem zweiten Signalanschluss ausgebildet ist.

Besonders zweckmäßig ist es das Steuer- und Datenübertragungsmodul mit einem mit der Steuerelektronik verbundenen Kommunikations-Schnittstellenverbinder auszubilden, zum Verbinden des Steuer- und/oder Datenübertragungsmoduls mit einem weiteren Steuer- und/oder Datenübertragungsmodul.

Von Vorteil ist ferner, das Steuer- und/oder Datenübertragungsmodul mit einer Auswurfeinrichtung zum manuellen Lösen der Verbindung zwischen dem Steuer- und/oder Datenübertragungsmodul und der Anzahl von E/A-Modulen bereitzustellen.

Zusammenfassend gewährleistet die Erfindung somit ein Steuer- und/oder Datenübertragungsystem, bei welchem ein Steuer- und/oder Datenübertragungsmodul mit einer vorgebbaren Anzahl von E/A-Modulen lösbar verbindbar ist, insbesondere durch eine Steck- oder Klemmverbindung. Je nach Anordnung der E/A-Module kann somit jeder Anschluß grundsätzlich als Eingang oder Ausgang definiert werden und jedem Eingang oder Ausgang kann gemäß bevorzugter Weiterbildungen individuell eine E/A-Elektronik zugewiesen werden, wobei in weiterer zweckmäßiger Weiterbildung auch die Verbindung zwischen E/A-Modul und E/A-Elektronik lösbar ist, so dass z.B. die E/A-Elektronik eines E/A-Moduls auch ohne Austausch dieses E/A-Module austauschbar ist. Die mit einem erfindungsgemäßen Steuer- und/oder Datenübertragungsmodul verbindbaren E/A-Module können also individuell, beispielsweise mit der Funktion eines Relais, Optokopplers, PLC-VTs oder auch eines einfachen Signaldurchleitungs-Module zusammengestellt sein.

Bei Defekt eines E/A-Moduls oder einer E/A-Elektronik kann diese(s) auf einfache Weise ausgetauscht und somit durch ein(e) neue(s) ersetzt werden. Über eine in dem Steuer- und/oder Datenübertragungsmodul integrierte Klemmleiste kann eine weitere Anzahl von vorzugsweise digitalen Eingängen und/oder Ausgängen verarbeitet werden. Ferner können gemäß bevorzugter Ausführungsformen mehrere Steuer- und/oder Datenübertragungsmodule miteinander verschaltet werden und beispielsweise über ein als Master adaptiertes Steuermodul gemeinsam, jedoch auch individuell, betrieben werden. Die Programmierung der Steuerungselektronik erfolgt zweckmäßigerweise über eine Software, wobei das Steuerprogramm zum Beispiel mittels Funktionsbausteinen erstellt wird. Auch können somit Benutzer basierte Funktionsbausteine erstellt und in ein Grundprogramm integriert werden. Solche Funktionsbausteine können folglich, z.B. mittels angeschlossenem PC, auf einfache Weise ex- und/oder importiert werden.

Die Erfindung wird nachfolgend anhand eines bevorzugten Ausführungsbeispiels unter Bezugnahme der beigefügten Zeichnungen näher beschrieben.

In den Zeichnungen zeigen:
Figur 1 ein beispielhaftes E/A-Modul zur Anwendung innerhalb der Erfindung,
Figur 2 stark vereinfacht und schematisiert eine benachbarte Aneinanderreihung von 8 E/A-Modulen gemäß Figur 1 in Verbindung mit einem Steuer- und/oder Datenübertragungsmodul nach der Erfindung, und
Figur 3 eine beispielhafte Anordnung von weiteren E/A-Modulen zur Anwendung innerhalb der Erfindung.

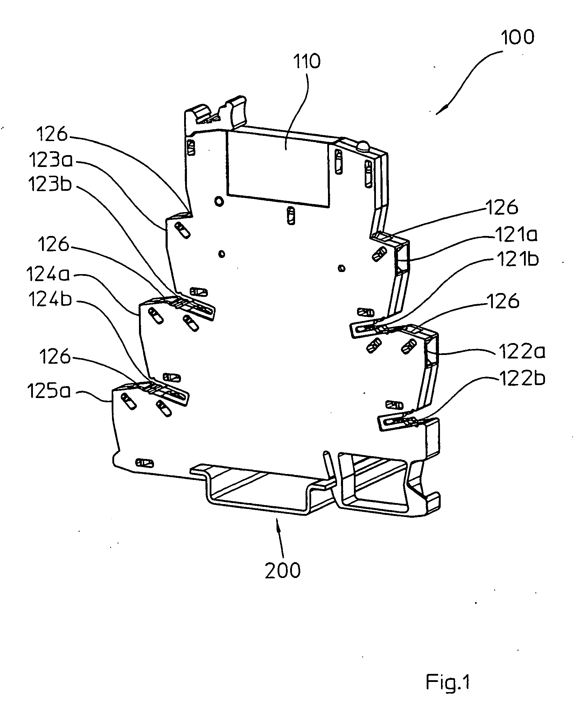

Nachfolgend wird zunächst auf Figur 1 Bezug genommen. Zu sehen ist ein Eingangs-/Ausgangs-Modul, bzw. E/A-Modul 100, vorliegend in einer bevorzugten Ausführungsform einer Reihenklemme, die auf eine Tragschiene 200 aufklemmbar ist. Das E/A-Modul 100 umfasst eine Eingangs-/Ausgangs-Elektronik, bzw. E/A-Elektronik 110, die beim dargestellten Ausführungsbeispiel eine in das E/A-Modulgehäuse steckbare E/A-Elektronik 110 ist, und weist am Modulgehäuse eine Anzahl von Leiteranschlüssen auf. Die Leiteranschlüsse erstrecken sich z.B. in Leiteranschlusstrichter 121a, 122a, 123a, 124a und 125a, denen eine jeweilige Bedienöffnung 126 für eine Schraub- oder Federklemme zugeordnet ist. Einige Leiteranschlüsse erstrecken sich zusätzlich in Steckkontakte 121b, 122b, 123b und 124b. Diese zu den Leiteranschlusstrichtern parallelen Steckkontakte befinden sich innerhalb am E/A-Modulgehäuse angeordneten Schlitzen oder Brückenschächten.

Ein solches, z.B. von der Fa. Phoenix Contact GmbH & Co, Blomberg vertriebenes, oder anderes E/A-Modul wird in an sich bekannter Weise zwischen einen Busteilnehmer, wie beispielsweise Aktoren, Sensoren und andere Geräte und einen Datenbus eines Automatisierungssystems geschaltet. Je nachdem, welcher Busteilnehmer bzw. welche Art von Busteilnehmer über das E/A-Modul an den Datenbus angekoppelt ist, stellt somit das jeweilige E/A-Modul 100 oder die E/A-Elektronik 110 im Fall eines individuell mit einer E/A-Elektronik bestückbaren E/A-Moduls einen Signalkanal bereit, über den in Bezug auf den Datenbus Eingangssignale oder Ausgangssignale, d.h. Steuer- und/oder Datenübertragungssignale, in vorgegebener Weise verarbeiten werden. Die E/A-Module und/oder die E/A-Elektronik können ferner zum Bereitstellen von Signalkanälen auch lediglich zum Durchleiten derartiger Signale, d.h. ohne eine Signalverarbeitung durchzuführen, ausgebildet sein. Die Stromversorgung für die Modulelektronik und die Leistungsversorgung der an die E/A-Module angeschlossenen Busteilnehmer kann jeweils gesondert oder zusammen erfolgen.

In jeden Fall ist jedoch wenigstens ein Anschluß als Steuersignal- und/oder Datenübertragungssignalanschluß, nachfolgend und in den Ansprüchen auch als Signalanschlüsse bezeichnet, dem Signalkanal des E/A-Moduls bzw. der E/A-Elektronik zugeordnet, der über eine mit diesem gepaarte Anschlussleitung als Eingang oder Ausgang an den Datenbus gelegt wird. Im vorliegendem Beispiel gemäß Fig. 1 ist dies der Anschluß 121a, der mittels Schraub- oder Klemmverbindung gepaart werden kann sowie der parallele Steckanschluss 121b. Ein weiterer Anschluß ist dem Signalkanal des E/A-Moduls bzw. der E/A-Elektronik 110 derart zugeordnet, daß dieser über eine entsprechende Verbindung an den Busteilnehmer gelegt werden muß, im vorliegenden Fall beispielsweise der Anschluß 125a. Die Anschlüsse für den Busteilnehmer sowie für den Datenbuss sind somit im vorliegenden Fall von der Seite des des E/A-Moduls her zugänglich, wobei dies jedoch nicht zwingend sein muß.

Eine Vielzahl solcher E/A-Module, die beispielsweise Relais oder Optokoppler mit Anschlüssen zur digitalen oder auch analogen Signalverarbeitung umfassen oder auch lediglich einfache Durchgangsmodule zur Durchleitung eines Steuer- und/oder Datenübertragungsignals bereitstellen, können in an und für sich bekannter Weise benachbart zueinander aneinandergereiht werden, gemäß Fig. 1 benachbart zueinander auf der Tragschiene 200 aneinandergereiht werden..

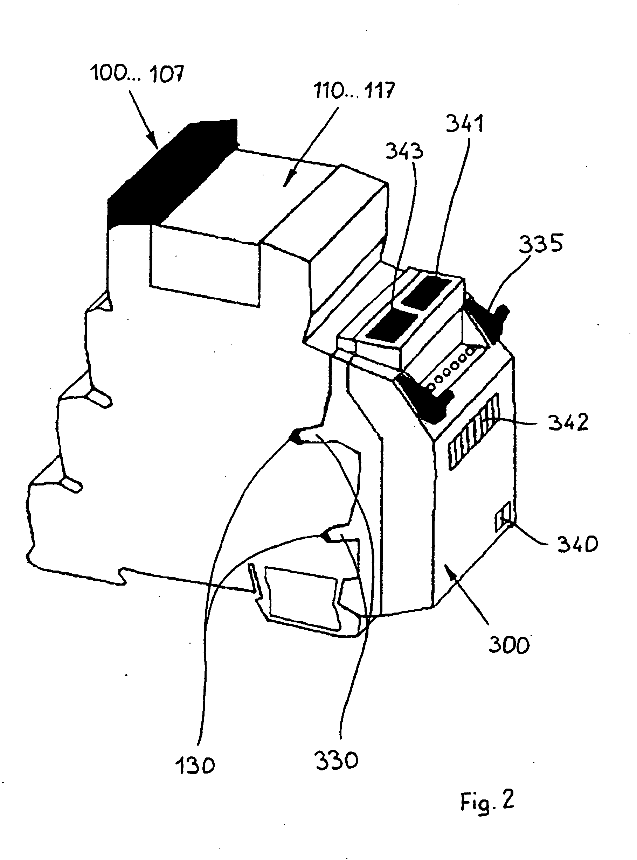

Figur 2 zeigt eine stark vereinfachte und schematisierte Ansicht eines Steuer- und/oder Datenübertragungssystems gemäß der Erfindung unter Nutzung einer Anzahl von E/A-Modulen, z.B. von acht E/A-modulen 100 ... 107 mit jeweiliger E/A-Elektronik 110 ... 117, gemäß Figur 1, die benachbart zueinander auf der bei Figur 2 nicht dargestellten Tragschiene angeordnet sind. Ferner ist ein erfindungsgemäßes Steuer- und/oder Datenübertragungsmodul 300 mit diesen E/A-Modulen wieder lösbar verbunden. Gemäß Ausführungsbeispiel der Fig. 2 ist das Modul 300 in Brückenschächte 130 gesteckt, in welchen die Steckkontakte 121b und 122b angeordnet sind. Eine erste Verbindungseinrichtung jedes der E/A-Module zum Verbinden mit dem Modul 300 wird folglich durch die Schlitze oder Brückenschächte 130 bereitgestellt. Das Steuermodul weist komplementär hierzu ausgebildete Stege 330 auf, die zu den in den Brückenschächten angeordneten Steckkontakten komplementäre, bei Fig. 2 nicht dargestellte, steckbare Kontaktanschlüsse aufweisen. Eine zweite Verbindungseinrichtung des Moduls 300 zum Verbinden des Moduls 300 mit einer vorbestimmten Anzahl von E/A-Modulen 100 ... 107 ist folglich durch die Stege 330 bereitgestellt. Ferner weist das Steuermodul eine Auswurfeinrichtung 335 auf, mit welcher durch manuelle Betätigung eines Schwenkhebels die Stege 330 aus den Brückenschächten 130 wieder heraus bewegt werden können, so dass die Verbindung jederzeit wieder lösbar ist. Somit sind die E/A-Module 100 ... 107 vorgesehen, das Steuer- und Datenübertragungsmodul 300 aufzunehmen bzw. zu tragen.

Durch die aneinander gereihte Anordnung der Stege 330 und der steckbaren Kontaktanschlüsse, von denen applikationszpezifisch aneinandergereihte Steuer- und/oder Datenübertragungssignal-Anschlüsse bereitstellen, die mit einer in dem Modul integrierten Steuerelektronik zur Signalverarbeitung entsprechend verbunden sind, ist folglich das erfindungsgemäße Steuer- und/oder Datenübertragungsmodul 300 mit einer vorbestimmten Anzahl von aneinandergereihten E/A-Modulen mechanisch verbindbar. Die Anordnung der steckbaren Kontaktanschlüsse an den Stegen bietet darüber hinaus eine äußerst effiziente Anordnung zwischen den mechanischen Verbindungseinrichtungen des Moduls 300 und den Steuer- und/oder Datenübertragungssignal-Anschlüssen des Moduls 300, um beim Verbinden des Moduls 300 mit den E/A-Modulen 100 ... 107 ein Paaren von einem jeweiligen Steuer- und/oder Datenübertragungssignal-Anschluss des Moduls 300 mit einem jeweils zuzuordnenden Steuer- und/oder Datenübertragungssignal-Anschluss 121b eines E/A-Moduls zu ermöglichen.

Das Steuermodul weist ferner einen Spannungsversorgungsanschluss 340 auf. Ferner ist das dargestellte Steuer- und/oder Datenübertragungsmodul mit einer Kommunikationsschnittstelle 341, im vorliegenden Beispiel eine RS 232-Schnittstelle, zur Programmierung der im Modul 300 integrierten Steuerelektronik, insbesondere eine CPU umfassend, über einen externen PC ausgebildet.

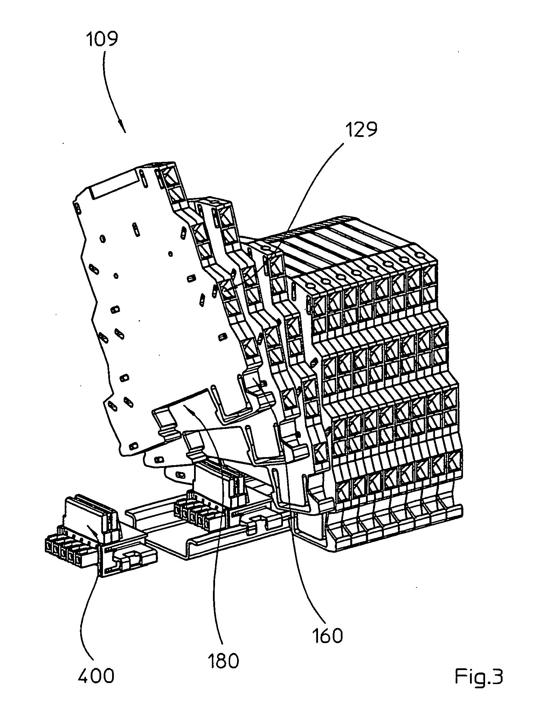

Das Steuer- und/oder Datenübertragungsmodul umfaßt ferner eine Anschlussleiste 342, im vorliegenden Beispiel eine 8-polige Klemmleiste, über die weitere Eingangssignale mit der Steuerelektronik verarbeitet werden können, und die gemäß Ausführung nach Fig. 3 weitere digitale Eingänge für das Modul 300, also weitere 8 digitale Eingänge, bereitstellt. Es sei darauf hingewiesen, dass je nach spezifischer Ausbildung eines Steuer- und/oder Datenübertragungsmoduls nach der Erfindung über eine solche oder ähnliche Anschlussleiste auch zusätzliche analoge Eingänge/Ausgänge bereitgestellt werden können, diese jedoch üblicherweise wesentlich mehr Platz im Gehäuse des Steuer- und/oder Datenübertragungsmodul benötigen.

Des weiteren weist das Steuermodul eine Kommunikationsschnittstelle 343 auf, zur Kommunikation mit einem weiteren, nicht dargestellten Steuer- und/oder Datenübertragungsmodul. Ein solches weiteres Steuer- und/oder Datenübertragungsmodul kann wiederum eine entsprechende weitere Kommunikationsschnittstelle umfassen, um ein abermals weiteres Steuer- und/oder Datenübertragungsmodul an das System anzuschließen. Das bei Figur 2 dargestellte Steuer- und/oder Datenübertragungsmodul kann somit auch als Master fungieren und je nach Leistungsvermögen und Programmierung der Steuerelektronik mit einer Anzahl von weiteren als Slave angeschalteten Steuer- und/oder Datenübertragungsmodulen betrieben werden.

Beispielsweise ist die Steuerelektronik des dargestellten Steuer- und/oder Datenübertragungsmoduls ausgebildet, 48 E/A's digital und/oder analog verarbeiten zu können, so daß in diesem Fall drei wie bei Figur 2 dargestellte Steuer- und/oder Datenübertragungsmodule miteinander über Kommunikationsschnittstellen 343 zusammengeschlossen werden können und einer hiervon als Master fungiert. Die Steuer- und/oder Datenübertragungsmodule, die als Slave fungieren, müßten hingegen beispielsweise nur 16 E/A's bzw. mit diesen verbundene Busteilnehmer verarbeiten und die entsprechend verarbeiteten Steuer- und/oder Datenübertragungssignale an die Steuerelektronik des Master-E/A-Moduls weiterleiten können.

Je nachdem, ob die mit einem Steuer- und/oder Datenübertragungsmodul 300 verbundenen E/A-Module Relais, Optokoppler und/oder eine andere E/A-Elektronik oder auch nur reine Durchgangsmodule bereitstellen, ist dies über das Programm an der programmierbaren Steuerelelektronik des Steuer- und/oder Datenübertragungsmodul 300 einstellbar, so daß die Steuerelektronik jedes E/A-Modul entsprechend benutzen kann. Jedes E/A-Modul kann somit individuell bestückt werden und man ist nicht auf einen Bauteiltyp für die gesamte Steuerelektronik beschränkt. Vielmehr können die Eingänge und Ausgänge so bestückt werden, wie es der Anwender benötigt.

Die Programmierung der Steuerelektronik erfolgt zweckmäßigerweise über eine Software und das Steuerprogramm wird beispielsweise mittels Funktionsbausteinen erstellt. Es können Nutzerbasierte Funktionsbausteine erstellt und zur Erweiterung in ein vorgegebenes Grundprogramm integriert werden. Aufgrund der im Steuer- und/oder Datenübertragungsmodul integrierten Kommunikationsschnittstellen sind solche erweiternden Funktionsbausteine auch ex- oder importierbar und an einem angeschlossenen Rechner zur Programmierung kann folglich auch auf einfache Weise eine Simulation über ein Monitoring erfolgen.

Eine ergänzende oder alternative Möglichkeit, die Steuerelektronik des Steuer- und/oder Datenübertragungsmoduls zu programmieren oder auch zu parametrieren oder deren Zustände in umgekehrter Richtung, beispielsweise auf einem HMI darzustellen, besteht darin, E/A-Module einzustezen, die wenigstens einen weiteren Signalanschluss aufweisen, der mit einem Busstecker verbindbar ist.

Ein solcher Busstecker 400 ist beispielsweise der Figur 3 zu entnehmen. Der Busstecker 400 ist bei den zur Anwendung der Erfindung alternativ ausgeführten E/A-Modulen 109 gemäß Fig. 3 im unteren Bereich 180, über welchen ein jeweiliges E/A-Modul auf die Tragschiene gesetzt wird, angeordnet, wobei in diesem Fall zumindest das E/A-Modul, welches mit einem solchen oder ähnlichen Busstecker verbunden ist, im Verbindungsbereich mit einem weiteren Signalanschluß ausgebildet ist.

Im Fall der bei Fig. 3 dargestellten E/A-Module 109 werden jeweils erste Verbindungseinrichtungen zum Verbinden mit einem Steuer- und/oder Datenübertragungsmosul nach der Erfindung z.B. durch beidseitig angeordnete Absätze 160 bereitgestellt, wobei zweite, komplementär ausgebildete Verbindungseinrichtungen des Steuer- und/oder Datenübertragungsmoduls dann z.B. Zangen-artige Klemmschenkel bilden, die beim Aufsetzen des Steuer- und/oder Datenübertragungsmoduls auf ein Anzahl von E/A-Modulen 109 die Absätze 190 hintergreifen. Ein mit einer in dem Steuer- und/oder Datenübertragungsmodul integrierten Steuerelektronik zur Signalverarbeitung verbundener Steuer- und/oder Datenübertragungssignal-Anschlüsse ist in diesem Fall z.B. als Stifkontakt ausgebildet, der in der Trichter 129 eingreift und sich mit dem darin angeordneten Anschluss paart.

## Patentansprüche

1. Steuer- und Datenübertragungssystem umfassend, eine Anzahl von benachbart aneinandergereihten E/A-Modulen (100 ... 107), wobei jedes E/A-Modul wenigstens einen E/A-Signalkanal umfasst sowie wenigstens einen ersten Signalanschluss zum Verbinden des E/A-Signalkanals mit einem Datenbus und wenigstens einen zweiten Signalanschluss zum Verbinden eines Busteilnehmers mit dem E/A-Signalkanal, und wobei das System ein Steuer- und/oder Datenübertragungsmodul (300) umfasst, wobei das Steuer- und/oder Datenübertragungsmodul eine Steuerelektronik zum gezielten Ansteuern der Anzahl von E/A-Modulen umfasst und mit der Anzahl von E/A-Modulen mechanisch miteinander verbunden ist und eine lösbare Einheit mit diesen bildet und wobei die Anzahl von E/A-Modulen vorgesehen ist, um das Steuer- und/oder Datenübertragungsmodul (300) aufzunehmen.

2. Steuer- und Datenübertragungssystem nach vorstehendem Anspruch, ferner **dadurch gekennzeichnet, dass** jedes E/A-Modul ferner eine erste Verbindungseinrichtung (130) aufweist,
und das Steuer- und/oder Datenübertragungsmodul eine Anzahl von komplementär zu den ersten Verbindungseinrichtungen ausgebildeten zweiten Verbindungseinrichtungen (330) aufweist, die zum lösbaren mechanischen Verbinden des Steuer- und/oder Datenübertragungsmoduls (300) mit einer entsprechenden Anzahl von benachbart aneinandergereihten E/A-Modulen (100 ... 107) am Gehäuse des Steuer- und/oder Datenübertragungsmoduls (300) in einer Reihe angeordnet sind.

3. Steuer- und Datenübertragungssystem nach einem der vorstehenden Ansprüche, wobei das Steuer- und/oder Datenübertragungsmodul ferner eine entsprechende Anzahl von dritten, der Steuerelektronik zugeordneten Signalanschlüsse aufweist, wobei die Anzahl der dritten Signalanschlüsse und die Anzahl der zweiten Verbindungseinrichtungen derart zueinander angeordnet sind, dass beim Verbinden des Steuer- und/oder Datenübertragungsmoduls mit der Anzahl von E/A-Modulen sich jeweils ein dritter Signalanschluss mit jeweils einem ersten Signalanschluss oder sich jeweils ein dritter Signalanschluss mit jeweils einem zweiten Signalanschluss paart.

4. Steuer- und Datenübertragungssystem nach vorstehendem Anspruch, wobei das Steuer- und/oder Datenübertragungsmodul ferner eine Anzahl von vierten, der Steuerelektronik zugeordneten Signalanschlüssen aufweist, die von außerhalb des Steuer- und/oder Datenübertragungsmoduls zum Paaren zugänglich sind.

5. Steuer- und Datenübertragungssystem nach vorstehendem Anspruch, wobei das Steuer- und/oder Datenübertragungsmodul eine Klemmleiste (342) integriert, an welchen die vierten Signalanschlüsse zum Paaren angeschlossen sind
und/oder
wobei die vierten Signalanschlüsse Eingängen der Steuerelektronik zur Verarbeitung von digitalen Eingangssignalen zugeordnet sind.

6. Steuer- und Datenübertragungssystem nach einem der vorstehenden Ansprüche, ferner **dadurch gekennzeichnet, dass** die Steuerelektronik programmierbar ist.

7. Steuer- und Datenübertragungssystem nach vorstehendem Anspruch, ferner **gekennzeichnet durch** einen am Steuer- und/oder Datenübertragungsmodul angeordneten Kommunikations-Schnittstellenverbinder (341) zum Verbinden der Steuerelektronik mit einer entfernten Datenverarbeitungseinrichtung.

8. Steuer- und Datenübertragungssystem nach einem der vorstehenden Ansprüche,
wobei die E/A-Module zum Aufsetzen auf eine Trägerschiene (200) ausgebildet sind.

9. Steuer- und Datenübertragungssystem nach einem der vorstehenden Ansprüche wobei die E/A-Module eine jeweils zwischen dem ersten und zweiten Signalanschluss angeordnete E/A-Elektronik (110 ... 117) umfassen.

10. Steuer- und Datenübertragungssystem nach vorstehendem Anspruch, wobei die E/A-Module fünfte Signalanschlüsse zum Verbinden der E/A-Elektronik mit einem Busverbinder umfassen, wobei die E/A-Elektronik zum Übertragen von Daten zwischen dem fünften Signalanschluss und dem ersten Signalanschluss oder zum Übertragen von Daten zwischen dem fünften Signalanschluss und dem zweiten Signalanschluss ausgebildet ist.

11. Steuer- und Datenübertragungssystem nach einem der vorstehenden Ansprüche, ferner **gekennzeichnet durch** einen der Steuerelektronik zugeordneten Spannungsversorgungsanschluss (340)
und/oder
ferner **gekennzeichnet durch** einen mit der Steuerelektronik verbundenen Kommunikations-Schnittstellenverbinder (343) zum Verbinden des Steuer- und/oder Datenübertragungsmoduls mit einem weiteren Steuer- und/oder Datenübertragungsmodul nach einem der vorstehenden Ansprüche.

12. Steuer- und/oder Datenübertragungsmodul zur Ansteuerung von E/A-Modulen für ein Steuer- und Datenübertragungssystem, bei welchem jedes E/A-Modul wenigstens einen E/A-Signalkanal umfasst sowie einen ersten Signalanschluss zum Verbinden des E/A-Signalkanals mit einem Datenbus und zweiten Signalanschluss zum Verbinden eines Busteilnehmers mit dem E/A-Signalkanal und jedes E/A-Modul ferner eine erste Verbindungseinrichtung aufweist,
wobei das Steuer- und/oder Datenübertragungsmodul **gekennzeichnet ist durch**
eine Anzahl von komplementär zu den ersten Verbindungseinrichtungen ausgebildeten zweiten Verbindungseinrichtungen, die zum lösbaren mechanischen Verbinden des Steuer- und/oder Datenübertragungsmoduls mit einer entsprechenden Anzahl von benachbart aneinandergereihten E/A-Modulen am Gehäuse des Steuer- und/oder Datenübertragungsmoduls in einer Reihe angeordnet sind, wobei das Steuer- und/oder Datenübertragungsmodul **durch** die Anzahl der aneinandergereihten E/A-Module aufnehmbar ist, und eine in dem Gehäuse beherbergte Steuerelektronik zum gezielten Ansteuern von mit dem Steuer- und/oder Datenübertragungsmodul verbundenen E/A-Modulen.

13. Steuer- und/oder Datenübertragungsmodul nach vorstehendem Anspruch,
ferner **dadurch gekennzeichnet, dass** die Steuerelektronik programmierbar ist
und/oder
ferner **gekennzeichnet durch** einen Kommunikations-Schnittstellenverbinder zum Verbinden der Steuerelektronik mit einer entfernten Datenverarbeitungseinrichtung
und/oder
welches ferner eine entsprechende Anzahl von dritten, der Steuerelektronik zugeordneten Signalanschlüssen aufweist, wobei die Anzahl der dritten Signalanschlüsse und die Anzahl der zweiten Verbindungseinrichtungen derart zueinander angeordnet sind, dass beim Verbinden des Gehäuses mit der Anzahl von E/A-Modulen sich jeweils ein dritter Signalanschluss mit jeweils einem ersten Signalanschluss oder sich jeweils ein dritter Signalanschluss mit jeweils einem zweiten Signalanschluss paart.

14. Steuer- und/oder Datenübertragungsmodul nach einem der vorstehenden Ansprüche 12 bis 13, welches ferner eine Anzahl von vierten, der Steuerelektronik zugeordneten Signalanschlüssen aufweist, die von außerhalb des Gehäuses zum Paaren zugänglich sind.

15. Steuer- und/oder Datenübertragungsmodul nach vorstehendem Anspruch, welches eine am Gehäuse angeordnete Klemmleiste integriert, an welche die vierten Signalanschlüsse zum Paaren angeschlossen sind und/oder
wobei die vierten Signalanschlüsse Eingängen der Steuerelektronik zur Verarbeitung von digitalen Eingangssignalen zugeordnet sind.

16. Steuer- und/oder Datenübertragungsmodul nach einem der vorstehenden Ansprüche 12 bis 15, ferner **gekennzeichnet durch** einen der Steuerelektronik zugeordneten Spannungsversorgungsanschluss,
und/oder
ferner **gekennzeichnet durch** einen mit der Steuerelektronik verbundenen Kommunikations-Schnittstellenverbinder zum Verbinden des Steuer- und/oder Datenübertragungsmoduls mit einem weiteren Steuer- und/oder Datenübertragungsmodul nach einem der vorstehenden Ansprüche 14 bis 21,
und/oder
**gekennzeichnet durch** eine Auswurfeinrichtung zum manuellen Lösen der Verbindung zwischen dem Steuer- und/oder Datenübertragungsmodul und der Anzahl von E/A-Modulen.

## Claims

1. Control and data transmission system, including
a plurality of I/O modules (100 ... 107) arranged in series adjacent to each other, wherein each I/O module includes at least one I/O signal channel and at least one first signal terminal for connecting the I/O signal channel to a data bus and at least one second signal terminal for connecting a bus subscriber to the I/O signal channel, and
wherein the system includes a control and/or data transmission module (300), wherein the control and/or data transmission module includes control electronics for selectively controlling the plurality of I/O modules and is mechanically interconnected to the plurality of I/O modules and forms a releasable unit therewith, and wherein the plurality of I/O modules is provided in order to accommodate the control and/or data transmission module (300).

2. Control and data transmission system as claimed in the preceding Claim, further **characterised in that** each I/O module further comprises a first connection device (130),
and the control and/or data transmission module comprises a plurality of second connection devices (330) which are formed complementarily to the first connection devices and are disposed in series on the housing of the control and/or data transmission module (300) for the releasable mechanical connection of the control and/or data transmission module (300) to a corresponding plurality of I/O modules (100 ... 107) arranged in series adjacent to each other.

3. Control and data transmission system as claimed in any one of the preceding Claims, wherein the control and/or data transmission module further comprises a corresponding plurality of third signal terminals allocated to the control electronics, wherein the plurality of third signal terminals and the plurality of second connection devices are disposed with respect to each other such that upon connecting the control and/or data transmission module to the plurality of I/O modules each third signal terminal is paired with each first signal terminal or each third signal terminal is paired with each second signal terminal.

4. Control and data transmission system as claimed in the preceding Claim, wherein the control and/or data transmission module further comprises a plurality of fourth signal terminals which are allocated to the control electronics and are accessible from outside the control and/or data transmission module for pairing.

5. Control and data transmission system as claimed in the preceding Claim, wherein the control and/or data transmission module integrates a terminal strip (342) to which the fourth signal terminals are connected for pairing,
and/or
wherein the fourth signal terminals are allocated to inputs of the control electronics for processing digital input signals.

6. Control and data transmission system as claimed in any one of the preceding Claims, further **characterised in that** the control electronics can be programmed.

7. Control and data transmission system as claimed in the preceding Claim, further **characterised by** a communications interface connector (341) disposed on the control and/or data transmission module for connecting the control electronics to a remote data processing device.

8. Control and data transmission system as claimed in any one of the preceding Claims,
wherein the I/O modules are formed to be fitted on a carrier rail (200).

9. Control and data transmission system as claimed in any one of the preceding Claims, wherein the I/O module includes I/O electronics (110 ... 117) disposed in each case between the first and second signal terminal.

10. Control and data transmission system as claimed in the preceding Claim, wherein the I/O modules include fifth signal terminals for connecting the I/O electronics to a bus connector, wherein the I/O electronics are formed for transmitting data between the fifth signal terminal and the first signal terminal or for transmitting data between the fifth signal terminal and the second signal terminal.

11. Control and data transmission system as claimed in any one of the preceding Claims, further **characterised by** a voltage supply terminal (340) allocated to the control electronics,
and/or
further **characterised by** a communications interface connector (343) connected to the control electronics for connecting the control and/or data transmission module to a further control and/or data transmission module as claimed in any one of the preceding Claims.

12. Control and/or data transmission module for controlling I/O modules for a control and data transmission system, in which each I/O module includes at least one I/O signal channel and a first signal terminal for connecting the I/O signal channel to a data bus and a second signal terminal for connecting a bus subscriber to the I/O signal channel and each I/O module further comprises a first connection device, wherein the control and/or data transmission module is **characterised by** a plurality of second connection devices which are formed complementarily to the first connection devices and are disposed in series on the housing of the control and/or data transmission module for the releasable mechanical connection of the control and/or data transmission module to a corresponding plurality of I/O modules arranged in series adjacent to each other, wherein the control and/or data transmission module can be accommodated by the plurality of I/O modules arranged in series, and
control electronics housed in the housing for selectively controlling I/O modules connected to the control and/or data transmission module.

13. Control and/or data transmission module as claimed in the preceding Claim, further **characterised in that** the control electronics can be programmed,
and/or
further **characterised by** a communications interface connector for connecting the control electronics to a remote data processing device,
and/or
which further comprises a corresponding plurality of third signal terminals allocated to the control electronics, wherein the plurality of third signal terminals and the plurality of second connection devices are disposed with respect to each other such that upon connecting the housing to the plurality of I/O modules each third signal terminal is paired with each first signal terminal or each third signal terminal is paired with each second signal terminal.

14. Control and/or data transmission module as claimed in any one of the preceding Claims 12 to 13, which further comprises a plurality of fourth signal terminals which are allocated to the control electronics and are accessible from outside the housing for pairing.

15. Control and/or data transmission module as claimed in the preceding Claim, which integrates a terminal strip which is disposed on the housing and to which the fourth signal terminals are connected for pairing,
and/or
wherein the fourth signal terminals are allocated to inputs of the control electronics for processing digital input signals.

16. Control and/or data transmission module as claimed in any one of the preceding Claims 12 to 15, further **characterised by** a voltage supply terminal allocated to the control electronics,
and/or
further **characterised by** a communications interface connector connected to the control electronics for connecting the control and/or data transmission module to a further control and/or data transmission module as claimed in any one of the preceding Claims 14 to 21 [*sic*],
and/or
**characterised by** an ejection device for manually releasing the connection between the control and/or data transmission module and the plurality of I/O modules.

## Revendications

1. Système de commande et de transmission de données comprenant un certain nombre de modules d'entrée/sortie (100... 107) placés en série à proximité, chaque module d'entrée/sortie comprenant au moins un canal de signal d'entrée/sortie et au moins un premier branchement de signal pour la liaison du canal de signal d'entrée/sortie avec un bus de données et au moins un second branchement de signal pour la liaison d'un abonné de bus avec le canal de signal d'entrée/sortie, et le système comprenant un module de commande et/ou de transmission de données (300), le module de commande et/ou de transmission de données comprenant une électronique de commande pour l'actionnement ciblé du nombre de modules d'entrée/sortie et étant relié mécaniquement au nombre de modules d'entrée/sortie les uns aux autres et formant une unité amovible avec ces modules et le nombre de modules d'entrée/sortie étant prévu pour réceptionner le module de commande et/ou de transmission de données (300).

2. Système de commande et de transmission de données selon la revendication précédente, **caractérisé** également en ce que chaque module d'entrée/sortie présente aussi un premier dispositif de liaison (130),
et le module de commande et/ou de transmission de données présente un certain nombre de seconds dispositifs de liaison (330) réalisés de façon complémentaire aux premiers dispositifs de liaison, qui sont disposés dans une rangée pour la liaison mécanique amovible du module de commande et/ou de transmission de données (300 ) avec un nombre correspondant de modules d'entrée/sortie (100... 107) placés en série à proximité sur le boîtier du module de commande et/ou de transmission de données (300).

3. Système de commande et de transmission de données selon l'une quelconque des revendications précédentes, le module de commande et/ou de transmission de données présentant également un nombre correspondant de troisièmes branchements de signal attribués à l'électronique de commande, le nombre des troisièmes branchements de signal et le nombre des deuxièmes dispositifs de liaison étant disposés les uns par rapport aux autres de telle sorte que, lors de la liaison du module de commande et/ou de transmission de données avec le nombre de modules d'entrée/sortie, un troisième branchement de signal s'associe à chaque fois avec respectivement un premier branchement de signal ou un troisième branchement de signal s'associe à chaque fois avec respectivement un deuxième branchement de signal.

4. Système de commande et de transmission de données selon la revendication précédente, le module de commande et/ou de transmission de données présentant également un certain nombre de quatrièmes branchements de signal attribués à l'électronique de commande, qui sont accessibles par l'extérieur du module de commande et/ou de transmission de données pour l'appariement.

5. Système de commande et de transmission de données selon la revendication précédente, le module de commande et/ou de transmission de données intégrant une baguette de serrage (342), à laquelle les quatrièmes branchements de signal sont raccordés pour l'appariement
et/ou
les quatrièmes branchements de signal étant attribués à des entrées de l'électronique de commande pour le traitement de signaux d'entrée numériques.

6. Système de commande et de transmission de données selon l'une quelconque des revendications précédentes, **caractérisé** également en ce que l'électronique de commande est programmable.

7. Système de commande et de transmission de données selon la revendication précédente, **caractérisé** également par un connecteur interface de communication (341) disposé sur le module de commande et/ou de transmission de données pour la liaison de l'électronique de commande avec un dispositif de traitement de données éloigné.

8. Système de commande et de transmission de données selon l'une quelconque des revendications précédentes,
les modules d'entrée/sortie étant conçus pour être posés sur un rail support (200).

9. Système de commande et de transmission de données selon l'une quelconque des revendications précédentes, les modules d'entrée/sortie comprenant une électronique d'entrée/sortie (110... 117) disposée à chaque fois entre le premier et le deuxième branchements de signal.

10. Système de commande et de transmission de données selon la revendication précédente, les modules d'entrée/sortie comprenant des cinquièmes branchements de signal pour la liaison de l'électronique d'entrée/sortie avec un connecteur de bus, l'électronique d'entrée/sortie étant conçue pour la transmission de données entre le cinquième branchement de signal et le premier branchement de signal ou pour la transmission de données entre le cinquième branchement de signal et le second branchement de signal.

11. Système de commande et de transmission de données selon l'une quelconque des revendications précédentes, **caractérisé** également par un branchement d'alimentation en tension (340) attribué à l'électronique de commande
et/ou
**caractérisé** également par un connecteur interface de communication (343) relié à l'électronique de commande pour la liaison du module de commande et/ou de transmission de données avec un autre module de commande et/ou de transmission de données selon l'une quelconque des revendications précédentes.

12. Module de commande et/ou de transmission de données pour l'actionnement de modules d'entrée/sortie pour un système de commande et/ou de transmission de données, sur lequel chaque module d'entrée/sortie comprend au moins un canal de signal d'entrée/sortie et un premier branchement de signal pour la liaison du canal d'entrée/sortie avec un bus de données et un second branchement de signal pour la liaison d'un abonné de bus avec le canal d'entrée/sortie et chaque module d'entrée/sortie présentant également un premier dispositif de liaison ;
le module de commande et/ou de transmission de données étant **caractérisé par** un certain nombre de deuxièmes dispositifs de liaison conçus de façon complémentaire par rapport aux premiers dispositifs de liaison, qui sont disposés dans une rangée sur le boîtier du module de commande et/ou de transmission de données pour la liaison mécanique amovible du module de commande et de transmission de données avec un nombre correspondant de modules d'entrée/sortie placés en série à proximité, le module de commande et/ou de transmission de données pouvant être réceptionné par le nombre des modules d'entrée/sortie placés en série, et une électronique de commande hébergée dans le boîtier pour l'activation ciblée de modules d'entrée/sortie reliés au module de commande et/ou de transmission de données.

13. Module de commande et/ou de transmission de données selon la revendication précédente, **caractérisé** également en ce que l'électronique de commande est programmable
et/ou **caractérisé** également par un connecteur interface de communication pour la liaison de l'électronique de commande avec un dispositif de traitement de données éloigné
et/ou
lequel présente également un nombre correspondant de troisièmes branchements de signal attribués à l'électronique de commande, le nombre des troisièmes branchements de signal et le nombre des seconds dispositifs de liaison étant disposés les uns par rapport aux autres, de telle sorte que, lors de la liaison du boîtier avec le nombre de modules d'entrée/sortie, un troisième branchement de signal s'associe à chaque fois avec respectivement un premier branchement de signal ou un troisième branchement de signal s'associe à chaque fois avec respectivement un second branchement de signal.

14. Module de commande et/ou de transmission de données selon l'une quelconque des revendications précédentes 12 à 13, lequel présente également un certain nombre de quatrièmes branchements de signal attribués à l'électronique de commande, qui sont accessibles par l'extérieur du boîtier pour l'appariement.

15. Module de commande et/ou de transmission de données selon la revendication précédente, lequel intègre une baguette de serrage disposée sur le boîtier, à laquelle les quatrièmes branchements de signal sont raccordés pour l'appariement,
et/ou
les quatrièmes branchements de signal étant attribués à des entrées de l'électronique de commande pour le traitement de signaux d'entrée numériques.

16. Module de commande et/ou de transmission de données selon l'une quelconque des revendications précédentes 12 à 15, **caractérisé** également par un branchement d'alimentation en tension associé à l'électronique de commande,
et/ou
**caractérisé** également par un connecteur interface de communication relié à l'électronique de commande pour la liaison du module de commande et/ou transmission de données avec un autre module de commande et/ou de transmission de données selon l'une quelconque des revendications précédentes 14 à 21,
et/ou
**caractérisé par** un dispositif d'éjection pour le desserrage manuel de la liaison entre le module de commande et/ou de transmission de données et le nombre de modules d'entrée/sortie.
